# EUROPEAN PATENT APPLICATION

(11) **EP 4 064 527 A1**
(43) Date of publication of application: **28.09.2022**
(21) Application number: 22158698.5
(22) Date of filing: 25.02.2022
(51) Int. Cl.: H02K 3/28, H02K 3/52

(54) **MOTOR, COMPRESSOR, AND REFRIGERATION CYCLE APPARATUS**

(30) Priority: 26.03.2021 JP 2021053155
(71) Applicant: Toshiba Carrier Corporation, Kawasaki-Shi, Kanagawa 212-8585 (JP)
(72) Inventor: TAEMA, Yoshihiro, Shizuoka, 4168521 (JP); TAKAHASHI, Shuuhei, Shizuoka, 4168521 (JP)
(74) Representative: Gramm, Lins & Partner Patent- und Rechtsanwälte PartGmbB

(57) **Abstract**

To provide: a motor (12) with high manufacturability that has simple structure enabling its windings to be readily wound without quality deterioration caused by mistakes and variations in work accuracy in its manufacturing process, and can be configured as either an open-end winding induction motor or a star-connected motor; a compressor (2) including this motor (12); and a refrigeration cycle apparatus (1) including this compressor (2). the motor (12) includes first insulation-displacement connectors (57) and second insulation-displacement connectors (57) that are provided for each phase, first lead wires (23) connected to the first connectors (57) for each phase. the mother (12) further includes either a neutral conductor (63) for constituting star connection that is connected to the second connectors (57) for each phase or second lead wires (23) for constituting open-end winding induction motor that are connected to the second connectors (57) for each phase.

## Description

### TECHNICAL FIELD

The present invention relates to a motor, a compressor, and a refrigeration cycle apparatus.

### BACKGROUND

A known open-end winding induction motor includes three-phase (i.e., U-phase, V-phase, and W-phase) windings that are electrically separated from each other. In the open-end winding induction motor, the windings of the respective phases are independent of each other, and are not connected to each other. One end of the winding of each phase is connected to a first lead wire, and the other end of the winding of each phase is connected to a second lead wire. The first and second lead wires are led out to the outside of the open-end winding induction motor.

The open-end winding induction motor is rotationally driven by a drive circuit that includes: a first inverter circuit connected to one end of the winding of each phase via the first lead wire; and a second inverter circuit connected to the other end of the winding of each phase via the second lead wire.

[Patent Document 1] JP 2020-150679 A

Each phase of a conventional open-end winding induction motor has three windings connected in parallel. Let's focus on one phase, for example, the U-phase, a conventional open-end winding induction motor has an insulation-displacement connector that connects the three windings in parallel. The insulation-displacement connector has two slots (i.e., pressure-welding slots). The end wire of one of the three windings is press-fitted into one of the slots and a crossover bridged between the other two windings is press-fitted into the other slot.

In some cases, a motor is configured by star-connecting the windings. The star connection is also called a Y-connection or a star-shaped connection.

### Summary of Invention

An object of the present invention is to provide: a motor with high manufacturability that has a simple structure enabling its windings to be readily wound without quality deterioration caused by mistakes and variations in work accuracy in its manufacturing process, and can be configured as either an open-end winding induction motor or a star-connected motor; a compressor including this motor; and a refrigeration cycle apparatus including this compressor.

To achieve the above object, an aspect of the present invention provides the motor including: a cylindrical stator; and a rotor disposed inside the stator. The stator includes: an iron core that includes a cylindrical yoke, and a plurality of teeth in number of multiples of three protruding inward of the yoke and arranged in a circumferential direction at intervals; two insulators that are provided on both end faces in an axial direction of the iron core; a plurality of windings, each of which is wound between the plurality of teeth and the two insulators; a plurality of terminals provided in such a manner that two terminals are provided for each phase; and a plurality of first lead wires connected to one of the two terminals for each phase. The plurality of teeth have a plurality of segments in each of which the adjacent three phases windings are arranged in a same order. The two terminals for each phase connect the plurality of windings wound around the corresponding teeth in parallel or in series. The stator further includes either a neutral conductor for constituting star connection that is connected to the other of the two terminals for each phase or a plurality of second lead wires for constituting open-end winding induction motor that are connected to the other of the two terminals for each phase.

To achieve the above object, an aspect of the present invention provides the compressor including: an airtight container; a compression mechanism that is housed in the airtight container and can compress a refrigerant to be introduced into the airtight container; and the motor that is housed in the airtight container and being configured to drive the compression mechanism.

To achieve the above object, an aspect of the present invention provides the refrigeration cycle apparatus including: the compressor; a radiator; an expander; a heat absorber; and refrigerant pipe that connects the compressor, the radiator, the expander, and the heat absorber to circulate the refrigerant.

### BRIEF DESCRIPTION OF THE DRAWINGS

In the accompanying drawings:
Fig. 1 is a schematic diagram of a refrigeration cycle apparatus and a compressor according to one embodiment of the present invention;
Fig. 2 is a diagram illustrating a stator of a motor according to the embodiment of the present invention as viewed from a direction along the centerline of a crankshaft.
Fig. 3 is a connection wiring diagram when the motor according to the embodiment of the present invention is used as an open-end winding induction motor;
Fig. 4 is a connection wiring diagram when the motor according to the embodiment of the present invention is used as a star-connected motor;
Fig. 5 is a diagram illustrating an insulation-displacement connector of the motor according to the embodiment of the present invention;
Fig. 6 is a side view illustrating a wiring state between a crossover and a terminal line of the motor according to the embodiment of the present invention;
Fig. 7 is a developed view of the stator of the motor according to the embodiment of the present invention as viewed from the outer peripheral side;
Fig. 8 is another developed view of the stator of the motor according to the embodiment of the present invention as viewed from the outer peripheral side;
Fig. 9 is still another developed view of the stator of the motor according to the embodiment of the present invention as viewed from the outer peripheral side;
Fig. 10 is still another developed view of the stator of the motor according to the embodiment of the present invention as viewed from the outer peripheral side;
Fig. 11 is a diagram illustrating a first case of a neutral conductor by which the windings of the motor according to the embodiment of the present invention are star-connected;
Fig. 12 is a diagram illustrating a second case of the neutral conductor by which the windings of the motor according to the embodiment of the present invention are star-connected;
Fig. 13 is a diagram illustrating a third case of the neutral conductor by which the windings of the motor according to the embodiment of the present invention are star-connected;
Fig. 14 is a connection wiring diagram of another case in which the motor according to the embodiment of the present invention is used as an open-end winding induction motor; and
Fig. 15 is a connection wiring diagram of another case in which the motor according to the embodiment of the present invention is used as a star-connected motor.

### DETAILED DESCRIPTION

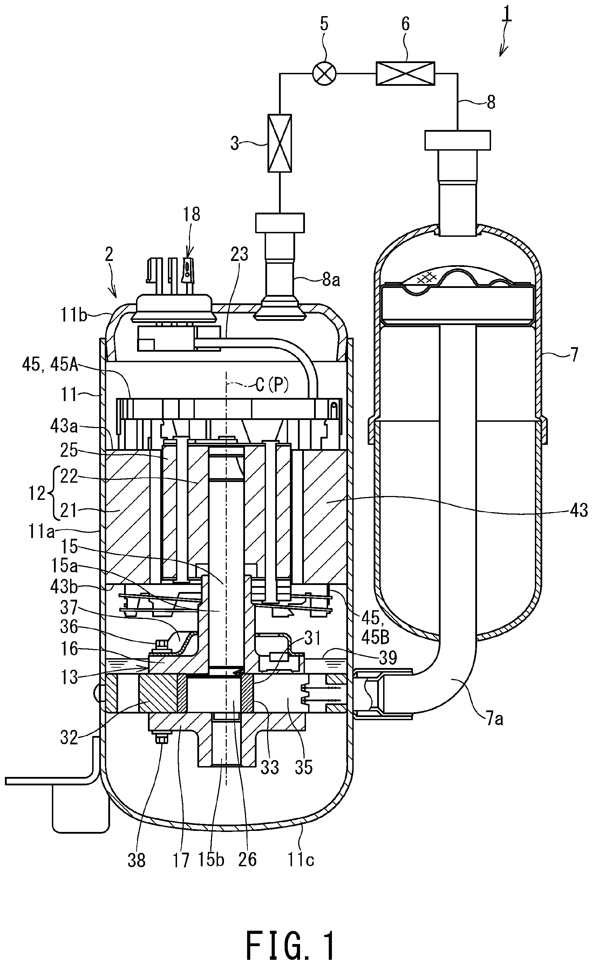

A description will now be given of a motor, a compressor, and a refrigeration cycle apparatus according to embodiments of the present invention by referring to Fig. 1 to Fig. 15. The same reference signs are given to identical or equivalent components in each figure.

Fig. 1 is a schematic diagram of a refrigeration cycle apparatus and a compressor according to one embodiment of the present invention.

As shown in Fig. 1, the refrigeration cycle apparatus 1 according to the present embodiment includes a closed compressor 2, a radiator 3, an expander 5, a heat absorber 6, an accumulator 7, and refrigerant pipe 8. The refrigerant pipe 8 connects the compressor 2, the radiator 3, the expander 5, the heat absorber 6, and the accumulator 7 in sequence to circulate a refrigerant.

The compressor 2 sucks in the refrigerant, which has passed through the heat absorber 6, via the refrigerant pipe 8, compresses it, and discharges the high-temperature and high-pressure refrigerant to the radiator 3 via the refrigerant pipe 8.

The compressor 2 includes: a vertically placed cylindrical airtight container 11 (i.e., closed container 11); a motor 12 arranged in the upper half of the airtight container 11; a compression mechanism 13 arranged in the lower half of the airtight container 11; a crankshaft 15 that transmits the rotational driving force of the motor 12 to the compression mechanism 13; a main bearing 16 that rotatably supports the crankshaft 15; and an sub bearing 17 that rotatably supports the crankshaft 15 in cooperation with the main bearing 16.

The airtight container 11 includes: a cylindrical body 11a extending in the vertical direction; an end plate 11b that closes the upper end portion of the body 11a; and an end plate 11c that closes the lower end portion of the body 11a.

The end plate 11b on the upper side of the airtight container 11 is connected to a discharge pipe 8a for discharging the refrigerant. The discharge pipe 8a is connected to the refrigerant pipe 8. Further, the end plate 11b on the upper side of the airtight container 11 is provided with at least one sealed terminal 18 for power supply.

The number of the sealed terminal(s) 18 to be provided on the end plate 11b is two when the motor 12 is used as an open-end winding induction motor, and is one when the motor 12 is used as a star-connected motor.

The motor 12 generates the driving force that rotates the compression mechanism 13. The motor 12 is a so-called three-phase induction motor. The motor 12 includes: a cylindrical stator 21 fixed to the inner wall of the airtight container 11; a rotor 22 arranged inside the stator 21 and fixed to the crankshaft 15; and a plurality of lead wires 23 pulled out from the stator 21 and connected to the sealed terminal(s) 18.

The rotor 22 includes: a rotor core (i.e., iron core) 25 having a magnet accommodating hole (not shown); and a permanent magnet accommodated in the magnet accommodating hole. The rotor 22 is rotatable with respect to the stator 21 and is fixed to the crankshaft 15. The rotation centerline C of the rotor 22 and the crankshaft 15 substantially coincides with the centerline P of the stator 21.

The plurality of lead wires 23 supply electric power to the stator 21 through the sealed terminal(s) 18. The plurality of lead wires 23 are wired depending on the configuration of the motor 12. When the motor 12 is used as an open-end winding induction motor, two lead wires 23 are wired for each of the U-phase, the V-phase, and the W-phase, i.e., a total of six lead wires 23 are wired in the entire three phases. When the motor 12 is used as a star-connected motor, one lead wire 23 is wired for each of the U-phase, the V-phase, and the W-phase, i.e., a total of three lead wires 23 are wired in the entire three phases.

The crankshaft 15 connects the motor 12 and the compression mechanism 13. The crankshaft 15 transmits the rotational driving force generated by the motor 12 to the compression mechanism 13.

The intermediate portion 15a of the crankshaft 15 connects the motor 12 to the compression mechanism 13 and is rotatably supported by the main bearing 16. The lower end portion 15b of the crankshaft 15 is rotatably supported by the sub bearing 17. The main bearing 16 and sub bearing 17 are also part of the compression mechanism 13. In other words, the crankshaft 15 penetrates the compression mechanism 13.

Further, the crankshaft 15 is provided with a crank-pin 26 that is arranged between the intermediate portion 15a supported by the main bearing 16 and the lower end portion 15b supported by the sub bearing 17. The crank-pin 26 is a disk or cylinder having a center that does not match the rotation centerline of the crankshaft 15. In other words, the crank-pin 26 is eccentric from the rotation centerline of the crankshaft 15.

The compression mechanism 13 can compress the refrigerant, i.e., a single refrigerant or a mixed refrigerant. When the motor 12 rotationally drives the crankshaft 15, the compression mechanism 13 sucks in the gaseous refrigerant from the refrigerant pipe 8 so as to compress it, and discharges the compressed refrigerant into the airtight container 11.

The compression mechanism 13 includes: a cylinder 32 having annular cylinder chamber 31; a rolling piston 33 arranged in the cylinder chamber 31; and a vane 35 that reciprocates in contact with the outer peripheral face of the rolling piston 33 and divides the inside of the cylinder chamber 31 into a suction chamber and a compression chamber.

The cylinder 32 is fixed to the airtight container 11 by welding at a plurality of points, for example, by spot welding at a plurality of points.

The cylinder chamber 31 is the space inside the cylinder 32 and is closed using the main bearing 16 and the sub bearing 17. The cylinder chamber 31 houses the crank-pin 26 of the crankshaft 15.

The main bearing 16 is fixed to the cylinder 32 with a fastener 38 such as a bolt. The main bearing 16 is provided with: a discharge valve mechanism (not shown) that discharges the refrigerant compressed inside the cylinder chamber 31; and a discharge muffler 37 that covers the discharge valve mechanism. The discharge valve mechanism opens its discharge port when the pressure difference between the pressure inside the cylinder chamber 31 and the pressure inside the discharge muffler 37 reaches a predetermined value due to the compression action of the compression mechanism 13, and thereby discharges the compressed refrigerant into the discharge muffler 37. The discharge muffler 37 has a discharge hole (not shown) that connects the inside and the outside of the discharge muffler 37. The compressed refrigerant having been discharged into the discharge muffler 37 is discharged into the airtight container 11 through the discharge hole.

The sub bearing 17 is fixed to the cylinder 32 by the fastener 38 such as a bolt.

The rolling piston 33 is fitted into (i.e., interdigitated with) the peripheral face of the crank-pin 26. The outer peripheral face of the rolling piston 33 is in line contact with the inner peripheral face of the cylinder chamber 31. As the crankshaft 15 rotates, the rolling piston 33 moves eccentrically while bringing its outer peripheral face into line contact with the inner peripheral face of the cylinder chamber 31.

The contact between the rolling piston 33 and the cylinder 32 is not a direct contact but an indirect contact with an oil film (or oil coating, not shown) of lubricating oil 39 intervening therebetween. For convenience of description, the indirect contact through the oil film is simply referred to as "contact". The same applies to the contact between the rolling piston 33 and the crank-pin 26, the contact between the rolling piston 33 and the main bearing 16, and the contact between the rolling piston 33 and the sub bearing 17.

A suction pipe 7a penetrates the airtight container 11 and is connected to the cylinder chamber 31 of the cylinder 32. The cylinder 32 has a suction hole (not shown) that connects the suction pipe 7a and the cylinder chamber 31.

The lower portion of the airtight container 11 is filled with the lubricating oil 39. Most of the compression mechanism 13 is immersed in the lubricating oil 39 in the airtight container 11.

Next, the stator 21 of the motor 12 will be described in detail.

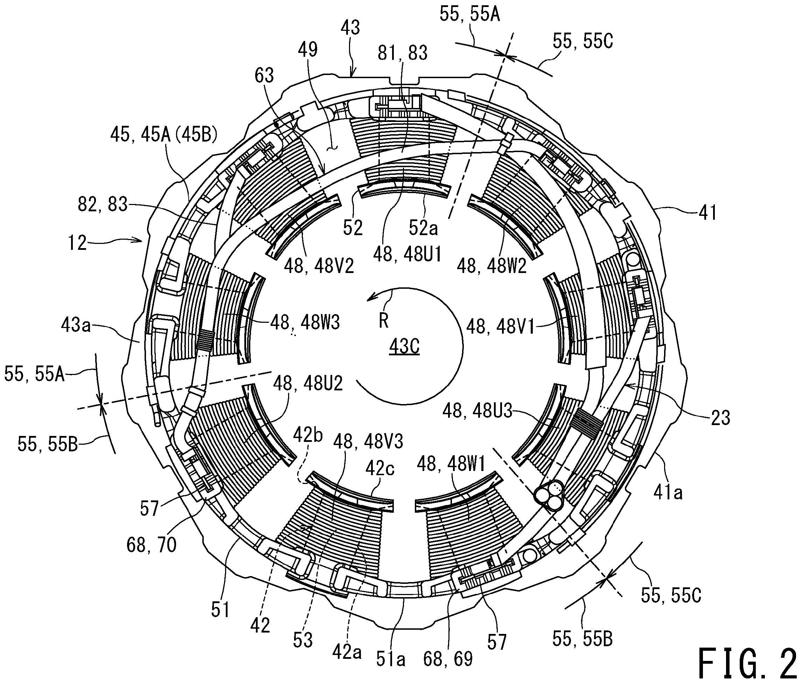

Fig. 2 is a diagram illustrating the stator of the motor according to the embodiment of the present invention as viewed from the direction along the centerline of the crankshaft.

Fig. 2 illustrates the motor 12 configured as a star-connected motor.

As shown in Fig. 2 in addition to Fig. 1, the motor 12 according to the present embodiment is a three-phase 3N slot motor. Here, N is a positive integer. The motor 12 in Fig. 2 is a three-phase nine-slot motor, and thus, N=3. Although the three-phase nine-slot motor 12 will be described below for simplifying the description, N may be four or more. That is, the motor 12 may be a three-phase 12-slot motor, may be a three-phase 15-slot motor, or may have more slots.

The stator 21 is a concentrated winding stator. The stator 21 is provided with a stator core (i.e., stator ironcore) 43 that includes: a cylindrical yoke 41; and nine teeth 42 protruding inward of the yoke 41 and arranged in the circumferential direction at intervals. The stator 21 further includes: two insulators 45 provided on the respective end faces of the stator core 43; a plurality of slot insulators (not shown); and wingdings 48 wound between the teeth 42 and the two insulators 45.

The direction of the centerline P of the stator 21 is referred to as the "axial direction". The centerline P of the stator 21 substantially coincides with the rotation centerline C of the rotor 22. In a plane orthogonal to the centerline P of the stator 21, the direction passing through the centerline P of the stator 21 is called "the diameter direction", and the circumferential direction around the centerline P of the stator 21 (i.e., the direction orthogonal to the radial direction) is called "the circumferential direction".

The stator core 43 is a laminated body of electromagnetic steel sheets. That is, the stator core 43 has a plurality of thin plates (not shown) laminated and integrated in the axial direction. Each thin plate is, for example, an electromagnetic steel sheet punched by a press. The stator core 43 has a pair of parallel end faces 43a and 43b. The normal lines of the pair of end faces 43a and 43b are oriented in the axial direction. The one end face 43a of the stator core 43 is close to the upper face of the stator 21, i.e., the end plate 11b on the upper side of the airtight container 11. The other end face 43b of the stator core 43 is closer to the lower face of the stator 21, i.e., the end plate 11c on the lower side of the airtight container 11, and is closer to the compression mechanism 13 than the end face 43a. The end face 43a is provided with a first insulator 45A, and the other end face 43b is provided with a second insulator 45B.

The centerline of the cylindrical yoke 41 coincides with the centerline P of the stator 21.

The nine teeth 42 are radially arranged at substantially equal intervals in the circumferential direction of the stator 21. Each of the teeth 42 extends radially inward from the yoke 41 of the stator 21. Each of the teeth 42 includes: a tooth base 42a protruding inward from the yoke 41 in the radial direction of the stator 21; and a tooth tip 42b provided at the tip of the tooth base 42a and extending in the circumferential direction of the stator 21. The tip of each tooth base 42a is located on the innermost circumference of the stator 21. Each tooth tip 42b has a tooth-tip face 42c facing the inside of the yoke 41. Each tooth-tip face 42c faces the rotor 22.

The tooth tip face 42c is formed in an arc shape centered on the centerline P of the stator 21. The rotor 22 is disposed in the rotor accommodation space 43c partitioned by the plurality of tooth-tip faces 42c. The outer peripheral face of the rotor 22 and the tooth-tip faces 42c are separated by a gap.

Two teeth 42 adjacent to each other in the circumferential direction and the yoke 41 partition slots 49. There are nine slots 49, number of which is the same as the number of teeth 42. Each slot 49 has a slot opening between the two tooth tips 42b of the adjacent two teeth 42.

Further, the stator core 43 has a first hole (not shown) extending from one end face 43a to the other end face 43b of the stator core 43. The first hole is formed at the outer peripheral edge portion of the stator core 43 and at the base portion of the tooth 42. The first hole extends substantially parallel to the centerline P of the stator 21.

Each insulator 45 is, for example, an integrally molded product of polybutylene terephthalate (PBT), liquid crystal polymer (i.e., LCP, Liquid Crystal Plastic, semiaromatic polyester, or fully aromatic polyester), polyphenylene sulfide (PPS), or polyamide (PA). The configuration common to the two insulators 45 will be described first. In the following description, the description of the second insulator 45B will be omitted, and the first insulator 45A will be described.

The first insulator 45A includes: an annular outer wall 51; a plurality of inner walls 52 that are arranged inside the outer wall 51 in the circumferential direction at intervals; and a plurality of bridging portions 53 that are bridged between the outer wall 51 and the respective inner walls 52.

The outer wall 51 is a ring that is thin in the radial direction, extends in the axial direction, and is continuous in the circumferential direction. Addition or alternatively, the outer wall 51 may have a substantially ring shape that is discontinuous in the circumferential direction.

Each inner wall 52 is an arcuate plate that is thin in the radial direction and extends in the axial and circumferential directions. The plurality of inner walls 52 are arranged in a ring.

Each bridging portion 53 is bridged between the inner peripheral face of the outer wall 51 and the radial outer face of the corresponding inner wall 52.

The outer wall 51, the plurality of inner walls 52, and the plurality of bridging portions 53 partition a plurality of spaces that house the windings 48. Each of those spaces overlaps with the corresponding tooth 42 in the direction along the centerline P of the stator 21.

Further, the first insulator 45A has an end face (not shown) in contact with the end face 43a of the stator core 43. The end face of the first insulator 45A extends over the outer wall 51, the inner walls 52, and the bridging portions 53.

Each space partitioned by the outer wall 51, two adjacent inner walls 52, and the two bridging portions 53 is spatially connected with (i.e., communicates with) the corresponding slot 49 of the stator core 43.

The outer wall 51, the inner walls 52, and the bridging portions 53 of the first insulator 45A are arranged so as to be overlaid on the yoke 41 and the tooth tip 42b and tooth base 42a of the corresponding tooth 42 of the stator core 43.

The outer wall 51 of the first insulator 45A is arranged next to (i.e., adjacent to) the yoke 41 of the stator core 43, each inner wall 52 is arranged next to the tooth tip 42b of the corresponding tooth 42 of the stator core 43, and each bridging portion 53 is arranged next to the tooth base 42a of the corresponding tooth 42 of the stator core 43.

The inner peripheral face 52a of the inner wall 52 does not protrude toward the side of the rotor 22 from the tooth tip face 42c of each tooth 42, i.e., does not protrude inward in the radial direction. Further, the radial outer face of the outer wall 51, i.e., the outer peripheral face 51a does not protrude outward from the outer peripheral face 41a of the yoke 41, i.e., does not protrude outward in the radial direction.

The tooth tip faces 42c are the inner peripheral face of the stator core 43, and the outer peripheral face 41a of the yoke 41 is the outer peripheral face of the stator core 43. The inner peripheral faces 52a of the inner walls 52 are the inner peripheral face of the first insulator 45A, and the outer peripheral face 51a is the outer peripheral face of the first insulator 45A.

Each slot insulator is inserted into the corresponding slot 49. Each slot insulator is, for example, polyethylene terephthalate (PET) or polyethylene naphthalate (PEN) formed in a sheet shape. The slot insulators protrude axially from the end faces 43a and 43b of the stator core 43. Thus, the slot insulators can prevent insulation failure at both of the boundary between the end face 43a of the stator core 43 and the first insulator 45A and the boundary between the end face 43b of the stator core 43 and the second insulator 45B.

Each winding 48 is wound by concentrated winding around the tooth base 42a of the corresponding tooth 42 of the stator core 43, the corresponding bridging portion 53 of the first insulator 45A, and the corresponding bridging portion 53 of the second insulator 45B.

The windings 48 includes U-phase windings 48U, V-phase windings 48V, and W-phase windings 48W. The windings 48 are independent windings that are continuously wound on three teeth 42 independently for each phase and are supplied with voltage separately. In each phase, the winding directions of the respective windings 48 alternate for each tooth 42.

For simplifying the description, the windings 48 of each phase are numbered in ascending order when viewed in the rotation direction R of the rotor 22. That is, the U-phase windings 48U includes a U-phase first winding 48U1, a U-phase second winding 48U2, and a U-phase third winding 48U3. The V-phase windings 48V includes a V-phase first winding 48V1, a V-phase second winding 48V2, and a V-phase third winding 48V3. The W-phase windings 48W includes a W-phase first winding 48W1, a W-phase second winding 48W2, and a W-phase third winding 48W3.

The U-phase first winding 48U1, the U-phase second winding 48U2, and the U-phase third winding 48U3 are wound around three teeth 42 in succession. The winding direction of the U-phase second winding 48U2 is opposite to the winding direction of the U-phase first winding 48U1, and the winding direction of the U-phase third winding 48U3 is opposite to the winding direction of the U-phase second winding 48U2. When the windings 48 is viewed from the outer circumference side of the stator 21, for example, the winding direction of the U-phase first winding 48U1 and the U-phase third winding 48U3 is counterclockwise and the winding direction of the U-phase second winding 48U2 is clockwise. The same applies to the respective winding directions of the V-phase windings 48V and the W-phase windings 48W, and duplicate description is omitted.

The windings 48 are arranged at equal intervals in the circumferential direction for each phase. In other words, the three U-phase windings 48U1, 48U2, and 48U3 are arranged every 120 degrees in the circumferential direction. The same applies to the V-phase and the W-phase. Thus, there are segments 55 (region 55) in which adjacent three-phase windings 48 are arranged in the same order, and the total number of the segments is a multiple of 3. In the present embodiment, the stator 21 includes: a first segment 55A in which the U-phase first winding 48U1, the V-phase second winding 48V2, and the W-phase third winding 48W3 are arranged in this order in the rotation direction R of the rotor 22; a second segment 55B in which the U-phase second winding 48U2, the V-phase third winding 48V3, and the W-phase first winding 48W1 are arranged in this order in the rotation direction R of the rotor 22; and a third segment 55C in which the U-phase third winding 48U3, the V-phase first winding 48V1, and the W-phase second winding 48W2 are arranged in this order in the rotation direction R of the rotor 22.

The nine teeth 42 are also divided into segments, in each of which adjacent three-phase windings 48 are arranged in the same order, and number of which is a multiple of 3.

Thus, when viewed in the rotation direction R of the rotor 22, the windings 48 are arranged in the order of the U-phase first winding 48U1, the V-phase second winding 48V2, the W-phase third winding 48W3, the U-phase second winding 48U2, the V-phase third winding 48V3, the W-phase first winding 48W1, the U-phase third winding 48U3, the V-phase first winding 48V1, and the W-phase second winding 48W2.

The order of the U-phase, the V-phase, and the W-phase in the arrangement may be different.

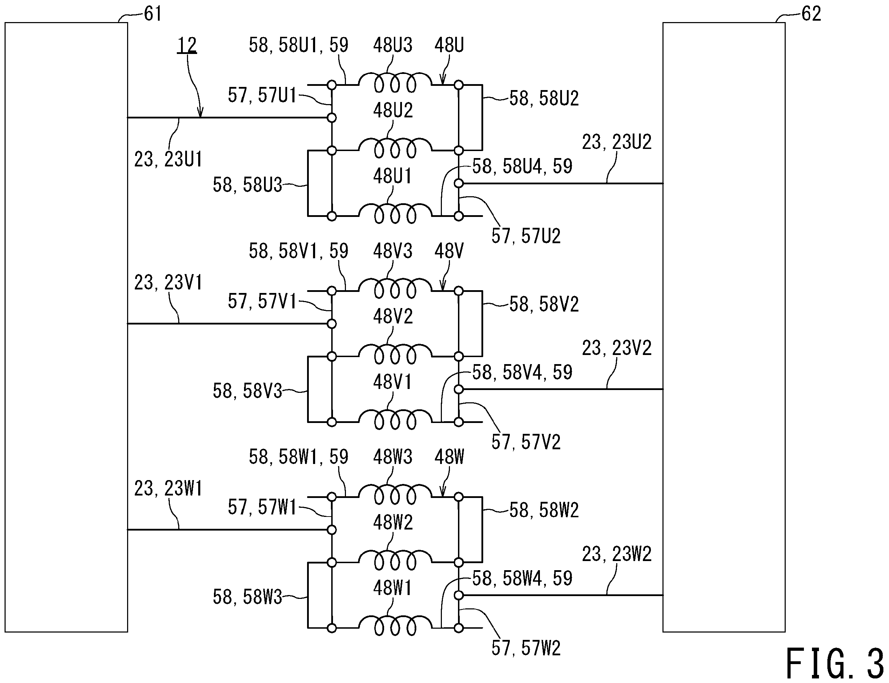

Fig. 3 is a connection wiring diagram when the motor according to the embodiment of the present invention is used as an open-end winding induction motor.

As shown in Fig. 3, the motor 12 according to the present embodiment can be used as an open-end winding induction motor. The windings 48 are connected in parallel for each phase.

The stator 21 of the motor 12 includes a plurality of insulation-displacement connectors 57. Specifically, there are two insulation-displacement connectors 57 for each phase. Each insulation-displacement connector 57 conducts three points of the windings 48 so as to connect the windings 48 of three slots 49 (for example, three U-phase windings 48U1, 48U2, 48U3) in parallel.

In other words, the two insulation-displacement connectors 57U of the U-phase are insulation-displacement connectors 57U1 and 57U2, each of which conductively connects with three points of the U-phase windings 48U so as to connect the three windings 48U1, 48U2, and 48U3 in parallel. The two insulation-displacement connectors 57V of the V-phase are insulation-displacement connectors 57V1 and 57V2, each of which conductively connects with three points of the V-phase windings 48V so as to connect the three windings 48V1, 48V2, and 48V3 in parallel. The two insulation-displacement connectors 57W of the W-phase are insulation-displacement connectors 57W1 and 57W2, each of which conductively connects with three points of the W-phase windings 48W so as to connect the three windings 48W1, 48W2, and 48W3 in parallel.

The winding 48 between the starting end of the U-phase windings 48U and the U-phase third winding 48U3 is called a first crossover 58U1, the winding 48 between the U-phase third winding 48U3 and the U-phase second winding 48U2 is called a second crossover 58U2, the winding 48 between the U-phase second winding 48U2 and the U-phase first winding 48U1 is called a third crossover 58U3, and the winding 48 between the U-phase first winding 48U1 and the tail end of the U-phase windings 48U is called a fourth crossover 58U4. The same applies to the names of the respective crossovers 58 in the V-phase windings 48V and the W-phase windings 48W, and duplicate description is omitted.

The U-phase first insulation-displacement connector 57U1 connects the terminal line 59 of the U-phase third winding 48U3, which corresponds to the starting end of the U-phase windings 48U, to the third crossover 58U3 between the two U-phase windings 48U2 and 48U1. The U-phase first insulation-displacement connector 57U1 is connected to the U-phase first lead wire 23U1.

The U-phase second insulation-displacement connector 57U2 connects the terminal line 59 of the U-phase first winding 48U1, which corresponds to the tail end of the U-phase windings 48U, to the second crossover 58U2 between the two U-phase windings 48U3 and 48U2. The U-phase second insulation-displacement connector 57U2 is connected to the U-phase second lead wire 23U2.

The V-phase first insulation-displacement connector 57V1 connects the terminal line 59 of the V-phase third winding 48V3, which corresponds to the starting end of the V-phase windings 48V, to the third crossover 58V3 between the two V-phase windings 48V2 and 48V1. The V-phase first insulation-displacement connector 57V1 is connected to the V-phase first lead wire 23V1.

The V-phase second insulation-displacement connector 57V2 connects the terminal line 59 of the V-phase first winding 48V1, which corresponds to the tail end of V-phase windings 48V, to the second crossover 58V2 between the two V-phase windings 48V3 and 48V2. The V-phase second insulation-displacement connector 57V2 is connected to the V-phase second lead wire 23V2.

The W-phase first insulation-displacement connector 57W1 connects the terminal line 59 of the W-phase third winding 48W3, which corresponds to the starting end of the W-phase windings 48W, to the third crossover 58W3 between the two windings 48W2 and 48W1 of the W-phase. The W-phase first insulation-displacement connector 57W1 is connected to the W-phase first lead wire 23W1.

The W-phase second insulation-displacement connector 57W2 connects the terminal line 59 of the W-phase first winding 48W1, which corresponds to the tail end of the W-phase windings 48W, to the second crossover 58W2 between the two W-phase windings 48W3 and 48W2. The W-phase second insulation-displacement connector 57W2 is connected to the W-phase second lead wire 23W2.

The U-phase first lead wire 23U1 is connected to the U-phase of a first inverter circuit 61 of the drive circuit (not shown) via one of the two sealed terminals 18. The V-phase first lead wire 23V1 is connected to the V-phase of the first inverter circuit 61 of the drive circuit via one of the two sealed terminals 18. The W-phase first lead wire 23W1 is connected to the W-phase of the first inverter circuit 61 of the drive circuit via one of the two sealed terminals 18.

The U-phase second lead wire 23U2 is connected to the U-phase of a second inverter circuit 62 of the drive circuit (not shown) via the other of the two sealed terminals 18. The V-phase second lead wire 23V2 is connected to the V-phase of the second inverter circuit 62 of the drive circuit via the other of the two sealed terminals 18. The W-phase second lead wire 23W2 is connected to the W-phase of the second inverter circuit 62 of the drive circuit via the other of the two sealed terminals 18.

In the following description on the relationship between the windings 48, the crossovers 58, the terminal lines 59, the lead wires 23, the teeth 42, and the slots 49 in each of the U-phase, V-phase, and W-phase, the letter of U, V, or W are added to identify each phase. In the description on the relationships between the windings 48, the crossovers 58, the terminal lines 59, the lead wires 23, the teeth 42, and the slots 49 that are common to the U-phase, V-phase, and W-phases, the letter of U, V, or W to identify each phase are omitted.

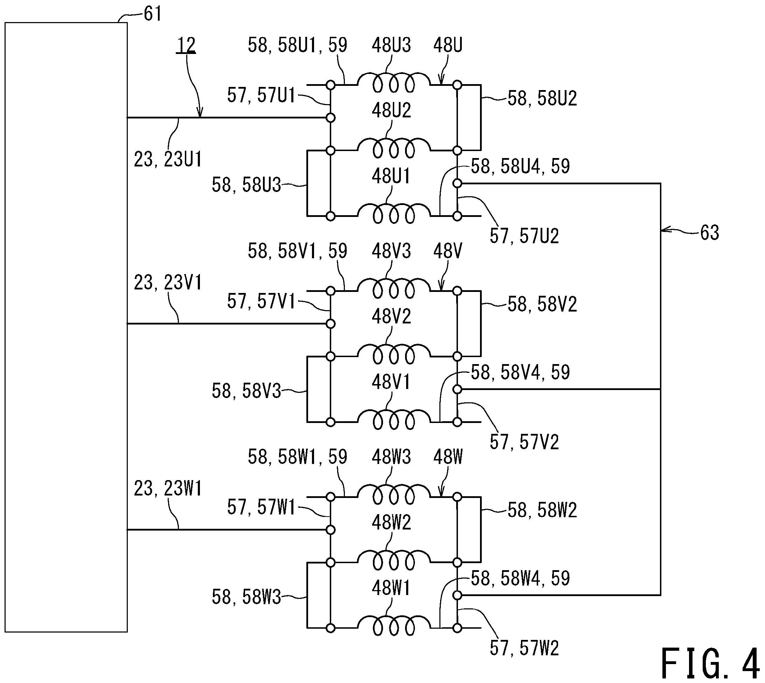

Fig. 4 is a connection wiring diagram when the motor according to the embodiment of the present invention is used as a star-connected motor.

The motor 12 according to the present embodiment can be used as a star-connected motor shown in Fig. 4 in addition to an open-end winding induction motor shown in Fig. 3. The motor 12 to be used as a star-connected motor is connected to one inverter circuit 61.

As to the star-connected motor 12, the same reference signs are given to the same components as those of the motor 12 used as an open-end winding induction motor shown in Fig. 3, and duplicate description is omitted.

The U-phase second insulation-displacement connector 57U2, the V-phase second insulation-displacement connector 57V2, and the W-phase second insulation-displacement connector 57W2 are connected to the neutral conductor 63 that constitutes the neutral point in the star connection. The neutral conductor 63 conductively connects the U-phase second insulation-displacement connector 57U2, the V-phase second insulation-displacement connector 57V2, and the W-phase second insulation-displacement connector 57W2 to each other.

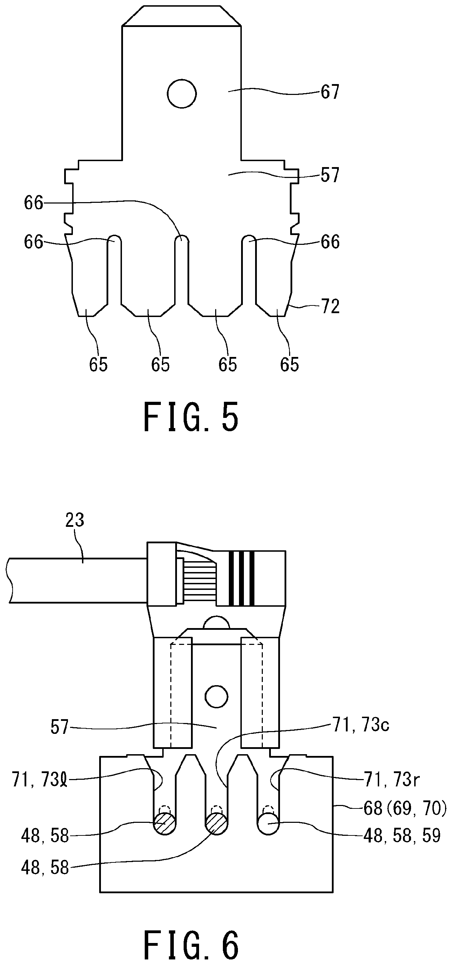

Fig. 5 is a diagram illustrating the insulation-displacement connector of the motor according to the embodiment of the present invention.

As shown in Fig. 5, each insulation-displacement connector 57 of the motor 12 according to the present embodiment includes: four pressure-welding protrusions 65; three slots 66 (i.e., pressure-welding slots 66) cut into a U shape between adjacent pressure welding protrusions 65; and a tab 67 for connecting the lead wire 23. A blade is formed on the periphery of each slot 66. The insulation-displacement connector 57 connects two points of the crossovers 58 respectively inserted into the two slots 66 to the terminal line 59 inserted into the remaining one slot 66.

It is sufficient if the number of slots 66 in each insulation-displacement connector 57 is the same as the number of windings 48 connected in parallel. The motor 12 according to the present embodiment has three slots 66, which is the same number of the windings 48 (for example, the U-phase first winding 48U1, the U-phase second winding 48U2, and the U-phase third winding 48U3) connected in parallel for each phase. Thus, when four windings 48 are connected in parallel for each phase, each insulation-displacement connector 57 has four slots 66. Assuming that N is a positive integer, in the motor 12 configured as a three-phase 3N slots motor , N windings 48 are connected in parallel for each phase and it is sufficient if each insulation-displacement connector 57 has N slots 66.

Fig. 6 is a side view illustrating a wiring state between the crossover and the terminal line of the motor according to the embodiment of the present invention.

As shown in Fig. 6 in addition to Fig. 2, the first insulator 45A on the upper side of the motor 12 according to the present embodiment is provided with a plurality of connector holders 68 that integrally hold three points of the windings 48 and the insulation-displacement connector 57.

The plurality of connector holders 68 includes: a first connector holder 69 that holds the insulation-displacement connectors 57 to be connected to the first inverter circuit 61; and a second connector holder 70 that holds the insulation-displacement connectors 57 to be connected to the second inverter circuit 62 or the neutral conductor 63.

One of the connector holder 68 is provided at outer periphery portion of one tooth 42 where the winding of the windings 48 starts, and the other connector holder 68 is provided at an outer periphery portion of another tooth 42 where the winding of the windings 48 ends. Each of the connector holder 68 is arranged on the centerline that bisects the corresponding teeth 42 in the circumferential direction. Each of the connector holder 68 includes: a wire holding portion 71 that holds the crossover 58 and the terminal line 59; and a connector insertion portion 72 into which the pressure-welding protrusion 65 of the insulation-displacement connector 57 is inserted.

The crossover 58 and the terminal line 59 held in the wire holding portion 71 are press-fitted into the slot 66 of the insulation-displacement connector 57. Insulations (not shown) of the crossover 58 and the terminal line 59 are broken by the blade of the slot 66 into which the crossover 58 and the terminal line 59 are press-fitted. Consequently, the crossover 58 and the terminal line 59 are conductively connected via the insulation-displacement connector 57.

The wire holding portion 71 has three grooves 73r, 73c and 731 that are parallel to the centerline of the corresponding tooth 42. The crossover 58 or the terminal line 59 to be press-fitted into the slot 66 is arranged in each of the three grooves 73r, 73c, and 731. In the two grooves 73r and 731, when the pressure-welding protrusions 65 of the insulation-displacement connector 57 are arranged below, and the tab 67 is disposed above, as viewed from the outer peripheral side of the stator 21, the right side of the connector holder 68 is defined as the groove 73r and the left side of the connector holder 68 is defined as the groove 731.

The tab 67 of the insulation-displacement connector 57 is connected to the lead wire 23.

In the motor 12 according to the present embodiment, in each phase, the crossover 58 between the two windings 48 and the terminal line 59 of one winding 48 are connected to the insulation-displacement connector 57, and this insulation-displacement connector 57 is connected to the lead wire 23. Accordingly, the motor 12 can reduce the number of lead wires 23 and reduce the time and effort required for the connection work as compared with the case where three windings 48 are individually connected to the lead wires 23 for each phase. Additionally, in the motor 12, the crossover 58 and the terminal line 59 are connected by using the insulation-displacement connector 57 having three slots 66. Hence, when connecting the crossover 58 and the terminal line 59, it is not necessary to peel off the respective insulation coating of the crossover 58 and the terminal line 59, and the time and effort required for the connection work can be further reduced. Moreover, there is no insulation coating pieces caused by peeling. Accordingly, insulation coating piece entering the gap of the rotating portion of the motor 12 can be prevented, and the performance of the motor 12 will not be impaired.

Next, the wiring path of the windings 48 will be described.

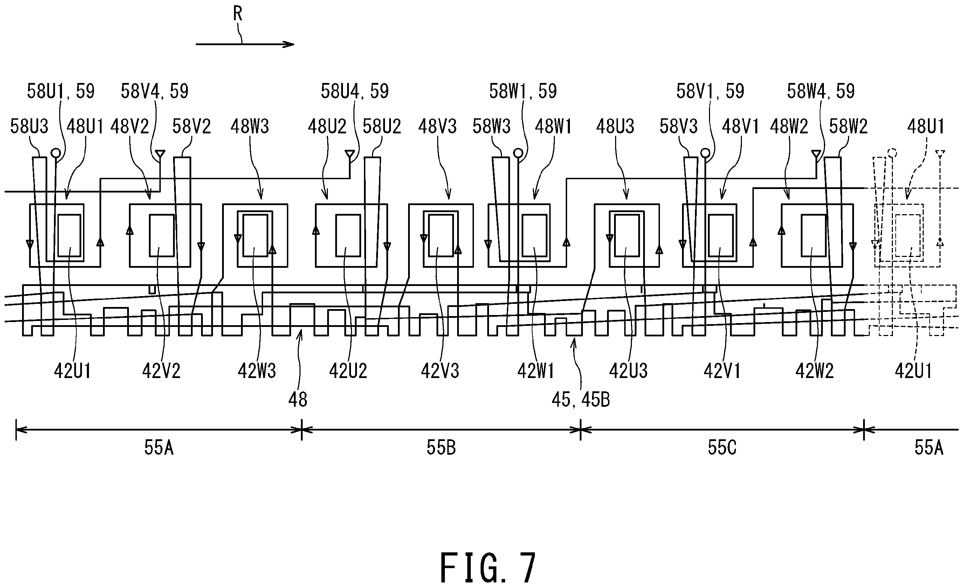

Fig. 7 is a developed view of the stator of the motor according to the embodiment of the present invention as viewed from the outer peripheral side.

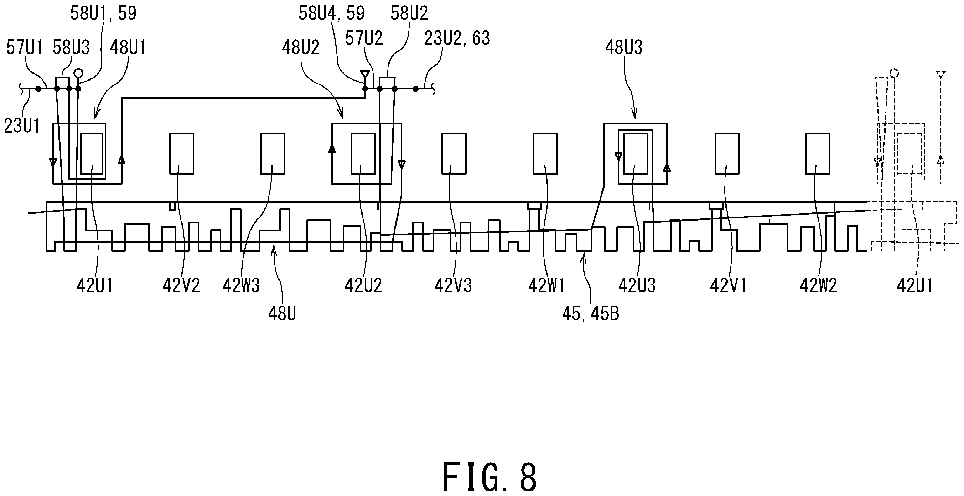

Fig. 8 is the developed view of the stator of the motor according to the embodiment of the present invention as viewed from the outer peripheral side.

Fig. 8 omits the illustration of the V-phase and the-W phase in Fig. 7 and illustrates a schematic wiring path of the U-phase windings 48U.

As shown in Fig. 7 and Fig. 8, the U-phase first connector holder 69U of the motor 12 according to the present embodiment is arranged on the outer periphery of the tooth 42U1 around which the U-phase first winding 48U1 is wound. The U-phase second connector holder 70U is arranged on the outer periphery of the tooth 42U2 around which the U-phase second winding 48U2 is wound.

Winding of the U-phase windings 48U starts at the starting end held by the U-phase first connector holder 69U and finishes at the tail end held by the U-phase second connector holder 70U. The U-phase windings 48U start from the U-phase first connector holder 69U and extend over the outer periphery of the second insulator 45B toward the tooth 42U3 as the first crossover 58U1. The U-phase windings 48U having reached the vicinity of the tooth 42U3 are wound as the U-phase third winding 48U3 around the tooth 42U3. Next, the U-phase windings 48U extend over the outer periphery of the second insulator 45B toward the tooth 42U2 as the second crossover 58U2. The U-phase windings 48U having reached the vicinity of the tooth 42U2 are folded back at the U-phase second connector holder 70U and then are wound around the tooth 42U2 as the U-phase second winding 48U2. Subsequently, the U-phase windings 48U extend over the outer periphery of the second insulator 45B toward the tooth 42U1 as the third crossover 58U3. The U-phase windings 48U having reached the vicinity of the tooth 42U1 are folded back at the U-phase first connector holder 69U and then are wound as the U-phase first winding 48U1 around the tooth 42U1. Subsequently, the U-phase windings 48U extend over the outer periphery of the first insulator 45A toward the U-phase second connector holder 70U as the fourth crossover 58U4, and complete winding.

Thus, the U-phase first connector holder 69U holds the starting end of the U-phase windings 48U (i.e., the terminal line 59 of the U-phase third winding 48U3) and the folded portion of the third crossover 58U3 between the U-phase second winding 48U2 and the U-phase third winding 48U3. The U-phase second connector holder 70U holds the tail end of the U-phase windings 48U (i.e., the terminal line 59 of the U-phase first winding 48U1) and the folded portion of the second crossover 58U2 between the U-phase third winding 48U3 and the U-phase second winding 48U2.

That is, the U-phase first connector holder 69U holds one of the terminal line 59 for the U-phase first winding 48U1, one of the terminal line 59 for the U-phase second winding 48U2, and one of the terminal line 59 for the U-phase third winding 48U3, while the second connector holder 70U holds the other of the terminal line 59 for the U-phase first winding 48U1, the other of the terminal line 59 for the U-phase second winding 48U2, and the other of the terminal line 59 for the U-phase third winding 48U3.

The U-phase first insulation-displacement connector 57U1 breaks two parts of the insulation coating at the folded portion of the third crossover 58U3 with its two slots 66 and breaks one part of the insulation coating of the terminal line 59 of the U-phase third winding 48U3 with one slot 66 so as to connect the three U-phase windings 48U1, 48U2, and 48U3 in parallel. The U-phase second insulation-displacement connector 57U2 breaks two parts of the insulation coating at the folded portion of the second crossover 58U2 with its two slots 66 and breaks one part of the insulation coating of the terminal line 59 of the U-phase first winding 48U1 with one slot 66 so as to connect the three U-phase windings 48U1, 48U2, and 48U3 in parallel.

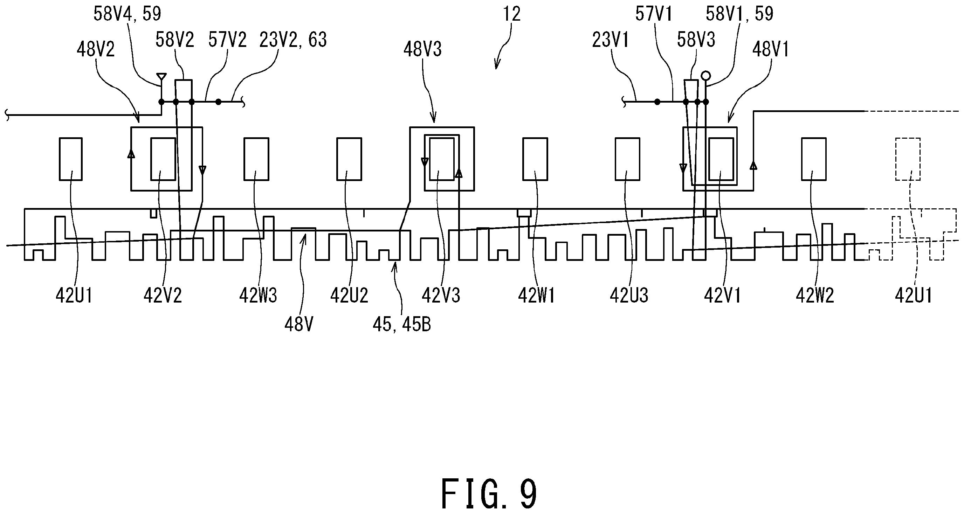

Fig. 9 is the developed view of the stator of the motor according to the embodiment of the present invention as viewed from the outer peripheral side.

Fig. 9 omits illustration of the U-phase and the-W phase from Fig. 7, and shows a schematic wiring path of the V-phase windings 48V.

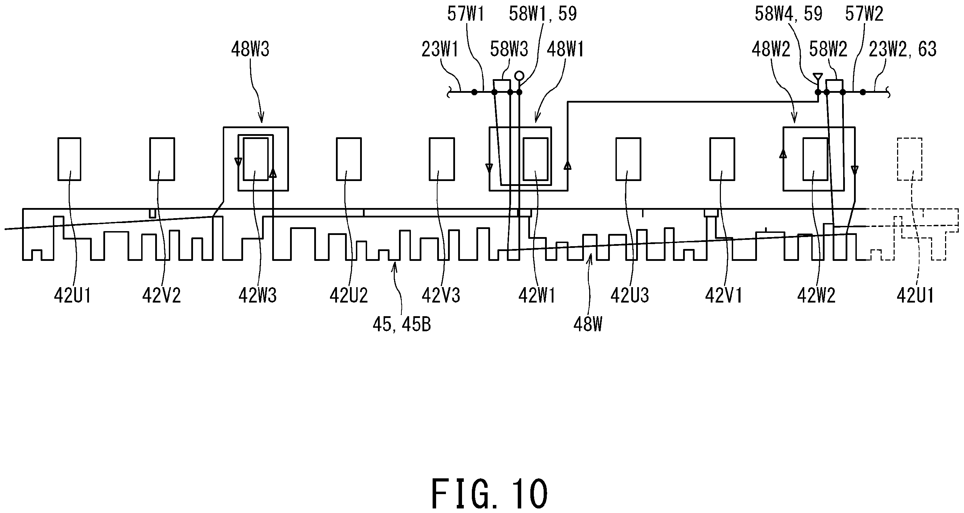

Fig. 10 is the developed view of the stator of the motor according to the embodiment of the present invention as viewed from the outer peripheral side.

Fig. 10 omits illustration of the U-phase and the-V phase from Fig. 7, and shows a schematic wiring path of the W-phase windings 48W.

As shown in Fig. 9 and fig. 10 in addition to Fig. 8, the V-phase windings 48V and the W-phase windings 48W also have substantially the same wiring path as the U-phase windings 48U, and further description on their wiring is omitted.

As described above, when viewed in the rotation direction R of the rotor 22, the windings 48 are arranged in the order of the U-phase first winding 48U1, the V-phase second winding 48V2, the W-phase third winding 48W3, the U-phase second winding 48U2, the V-phase third winding 48V3, the W-phase first winding 48W1, the U-phase third winding 48U3, the V-phase first winding 48V1, and the W-phase second winding 48W2. In other words, when viewed in the rotation direction R of the rotor 22, components of the windings 48 are in the order of the starting end of U-phase winding near the tooth 42U1 and the folded portion of the U-phase third crossover 58U3, the tail end of V-phase winding near the tooth 42V2 and the folded portion of the V-phase second crossover 58V2, the portion of passing the tooth 42W3, the tail end of U-phase winding near the tooth 42U2 and the folded portion of the U-phase second crossover 58U2, the portion passing the tooth 42V3, the starting end of W-phase winding near the tooth 42W1 and the folded portion of the W-phase third crossover 58W3, the portion passing the tooth 42U3, the starting end of V-phase winding near the tooth 42V1 and the folded portion of the V-phase third crossover 58V3, the tail end of W-phase winding near the tooth 42W2 and the folded portion of W-phase second crossover 58W2.

That is, when viewed in the rotation direction R of the rotor 22, the plurality of insulation-displacement connectors 57 are arranged in the order of the U-phase first insulation-displacement connector 57U1, the V-phase second insulation-displacement connector 57V2, the U-phase second insulation-displacement connector 57U2, the W-phase first insulation-displacement connector 57W1, the V-phase first insulation-displacement connector 57V1, and the W-phase second insulation-displacement connector 57W2. In other words, the U-phase first insulation-displacement connector 57U1 is arranged at a position separated from the V-phase first insulation-displacement connector 57V1 by two teeth 42 in the rotation direction R of the rotor 22, and the W-phase first insulation-displacement connector 57W1 is arranged at a position separated from the V-phase first insulation-displacement connector 57V1 by two teeth 42 in the direction opposite to the rotation direction R of the rotor 22. Additionally, the U-phase second insulation-displacement connector 57U2 is arranged at a position separated from the V-phase second insulation-displacement connector 57V2 by two teeth 42 in the rotation direction R of the rotor 22, and the W-phase second insulation-displacement connector 57W2 is arranged at a position separated from the V-phase second insulation-displacement connector 57V2 by two teeth 42 in the direction opposite to the rotation direction R of the rotor 22.

Thus, in both cases of open-end winding and star connection, the U-phase first lead wire 23U1, the V-phase first lead wire 23V1, and the W-phase first lead wire 23W1 are bundled in the range from the W-phase first insulation-displacement connector 57W1 to the U-phase first insulation-displacement connector 57U1 in the rotation direction R of the rotor 22 (i.e., bundled at intervals of five teeth 42 or bundled in a central angle range of 200 degrees, in the present embodiment).

The U-phase second lead wire 23U2, the V-phase second lead wire 23V2, and the W-phase second lead wire 23W2 in the case of open-end winding are bundled in the range from the W-phase second insulation-displacement connector 57W2 to the U-phase second insulation-displacement connector 57U2 in the rotation direction R of the rotor 22 (i.e., at intervals of five teeth 42 or in the central angle range of 200 degrees, in the present embodiment).

Additionally, the neutral conductor 63 in star connection is arranged in the range from the W-phase second insulation-displacement connector 57W2 to the U-phase second insulation-displacement connector 57U2 in the rotation direction R of the rotor 22 (i.e., at intervals of five teeth 42 or in the central angle range of 200 degrees, in the present embodiment).

Thus, in the case of open-end winding, the bundle of the U-phase first lead wire 23U1, the V-phase first lead wire 23V1, and the W-phase first lead wire 23W1 intersects the bundle of the U-phase second lead wire 23U2, the V-phase second lead wire 23V2, and the W-phase second lead wire 23W2 between the U-phase first winding 48U1 and the W-phase second winding 48W2 in the rotation direction R of the rotor 22. More specifically, the U-phase first lead wire 23U1 and the W-phase second lead wire 23W2 intersect each other.

In star connection, the bundle of the U-phase first lead wire 23U1, the V-phase first lead wire 23V1, and the W-phase first lead wire 23W1 intersects the neutral conductor 63 between the U-phase first winding 48U1 and the W-phase second winding 48W2 in the rotation direction R of the rotor 22. More specifically, the U-phase first lead wire 23U1 intersects the neutral conductor 63 connected to the W-phase second winding 48W2.

As described above, the stator 21 according to the present embodiment can be used for any one of open-end winding and star connection, and thus, the internal wiring of the motor 12 can be set as any one of open-end winding and star connection by selecting the lead wire 23 or the neutral conductor 63.

The starting ends of the windings 48 in the respective phases may belong to the same segment, and the tail ends of the windings 48 in the respective phases may belong to the same segment. For example, the U-phase first winding 48U1, the V-phase first winding 48V1, and the W-phase first winding 48W1 may belong to the same segment. The U-phase second winding 48U2, the V-phase second winding 48V2, and the W-phase second winding 48W2 may also belong to the same segment. In this case, the first connector holders 69 of the respective phases may also belong to the same segment, and the second connector holders 70 of the respective phases may also belong to the same segment.

Next, a description will be given of the neutral conductor 63 that constitutes a neutral point in open connection.

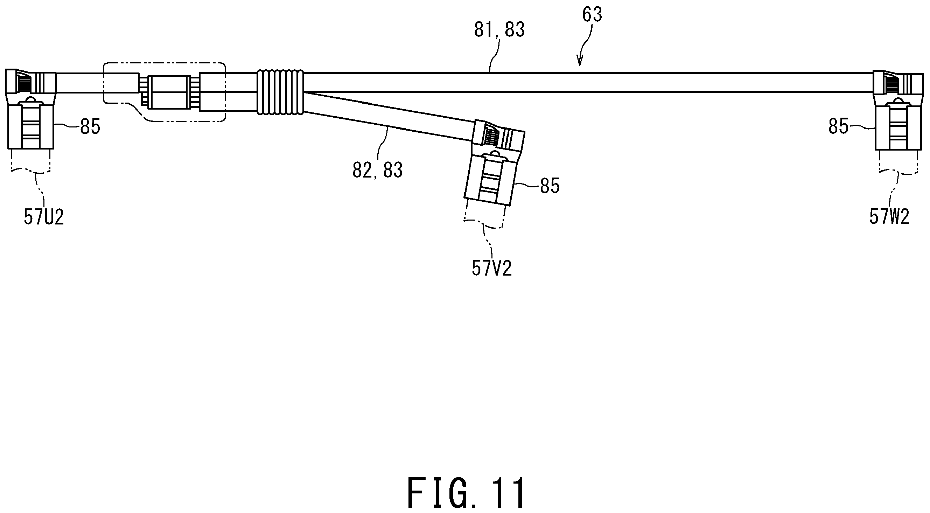

Fig. 11 is a diagram illustrating a first case of the neutral conductor by which the windings of the motor according to the embodiment of the present invention are star-connected.

As shown in FIG. 11, the neutral conductor 63 for star-connecting the windings 48 of the motor 12 of the present embodiment includes two power lines 83 composed of a first power line 81 and a second power line 82. The first power line 81 connects the other of the two insulation-displacement connectors 57 for one of the three phases to the other of the two insulation-displacement connectors 57 for another of the three phases. For example, the first power line 81 connects the W-phase second insulation-displacement connector 57W2 to the U-phase second insulation-displacement connector 57U2. The second power line 82 connects an appropriate intermedial portion of the first power line 81 to the other of the two insulation-displacement connectors 57 for the remaining one of the three phases. For example, the second power line 82 connects an appropriate intermedial portion of the first power line 81 to the V-phase second insulation-displacement connector 57V2.

The two power lines 83 are braided wires or Teflon lines.

A woven insulation coating of the first power line 81 is stripped off at both ends of the first power line 81 and at part of the intermedial portion of the first power line 81. One end of the first power line 81 is provided with a terminal 85 connected to the W-phase second insulation-displacement connector 57W2. The other end of the first power line 81 is provided with another terminal 85 connected to the U-phase second insulation-displacement connector 57U2.

A woven insulation coating of the second power line 82 is stripped off at both ends of the second power line 82. One end of the second power line 82 is provided with another terminal 85 connected to the V-phase second insulation-displacement connector 57V2.

The stripped (i.e., sheathless) part of the intermedial portion of the first power line 81 and the stripped (i.e., sheathless) part of the other end of the second power line 82 are connected by caulking.

That is, the neutral conductor 63 of the present embodiment constitutes the neutral point of the three-phase windings 48 using the two power lines 83 including the second power line 82 and the first power line 81 stripped off in the middle.

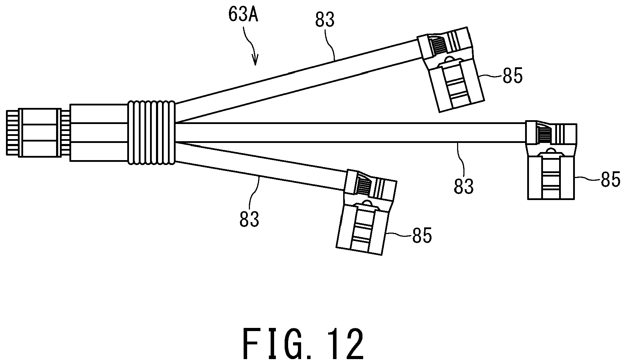

Fig. 12 is a diagram illustrating a second case of the neutral conductor by which the windings of the motor according to the embodiment of the present invention are star-connected.

As shown in Fig. 12, the neutral conductor 63A may be provided with three power lines 83, which are shorted at their respective one ends and are connected to the second insulation-displacement connectors 57 of the respective phases by their respective other ends. In other words, the neutral conductor 63A constitutes the neutral point with the three power lines 83. For example, the woven insulation coating of the power lines 83 are stripped at both ends of the respective power lines 83. One end of each power line 83 is provided with the terminal 85 connected to the second insulation-displacement connector 57. The other end of every power line 83 is integrally connected to each other by caulking.

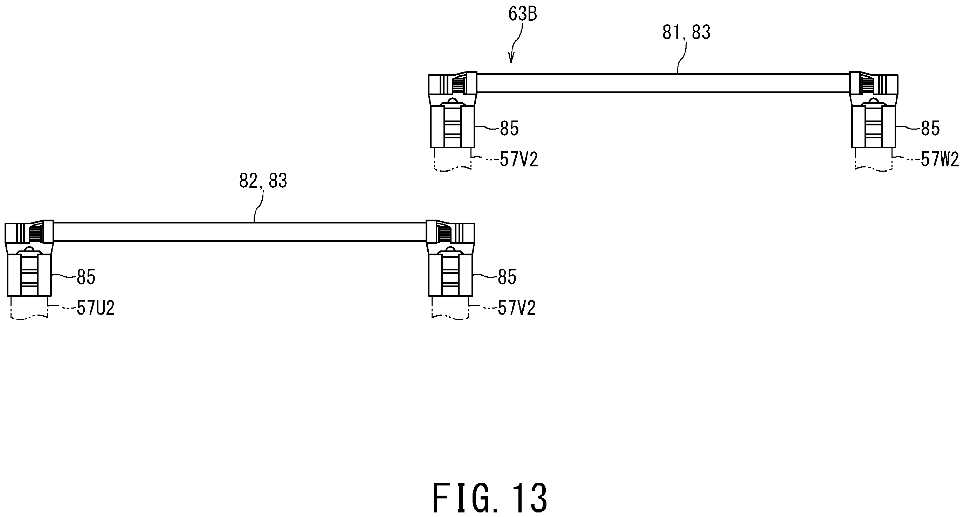

Fig. 13 is a diagram illustrating a third case of the neutral conductor by which the windings of the motor according to the embodiment of the present invention are star-connected.

As shown in Fig. 13, the neutral conductor 63B may include two power lines 83 composed of the first power line 81 that connects the second insulation-displacement connectors 57 of one combination of two phases selected from the three phases; and the second power line 82 that connects the second insulation-displacement connectors 57 of a combination of two phases different from the combination connected by the first power line 81. In this case, the neutral conductor 63B constitutes the neutral point with the two power lines 83 and the four terminals 85. For example, the woven insulation coating of the power lines 83 are stripped off at both ends of each of the power lines 83. Each of both ends of the corresponding power line 83 is provided with the terminal 85 connected to the second insulation-displacement connector 57. In this case, two V-phase second insulation-displacement connectors 57V2 are used, and the second connector holder 70 is provided so as to hold the two V-phase second insulation-displacement connectors 57V2. One of the power lines 83 connects the W-phase second insulation-displacement connector 57W2 to the V-phase second insulation-displacement connector 57V2, and the other of the power lines 83 connects the U-phase second insulation-displacement connector 57U2 to the V-phase second insulation-displacement connector 57V2. Thus, two V-phase second insulation-displacement connectors 57V2 are provided side by side in the second connector holder 70.

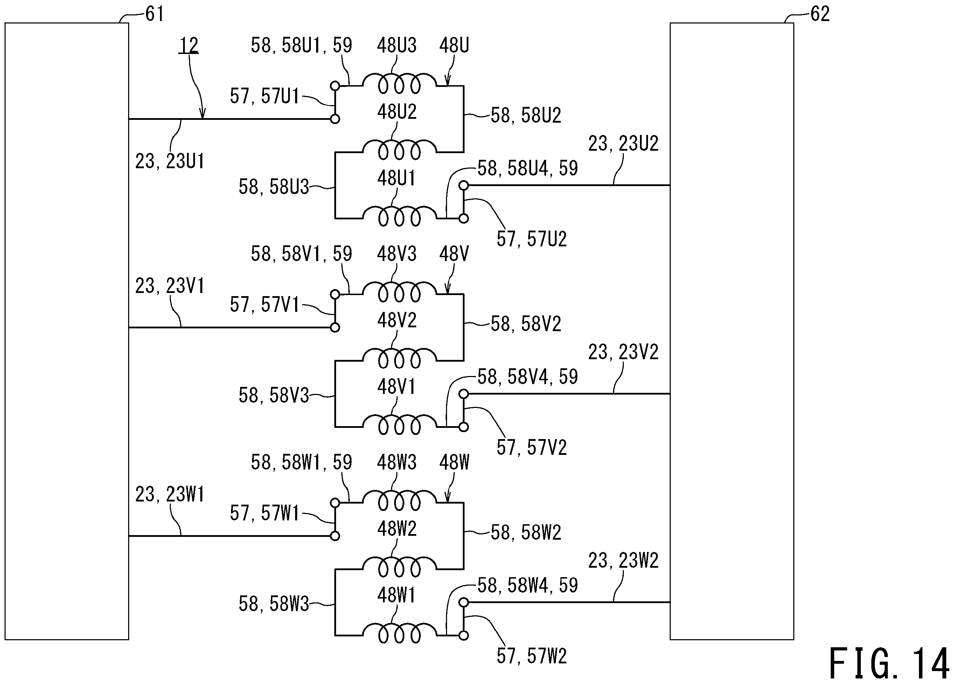

Fig. 14 is a connection wiring diagram of another case in which the motor according to the embodiment of the present invention is used as an open-end winding induction motor.

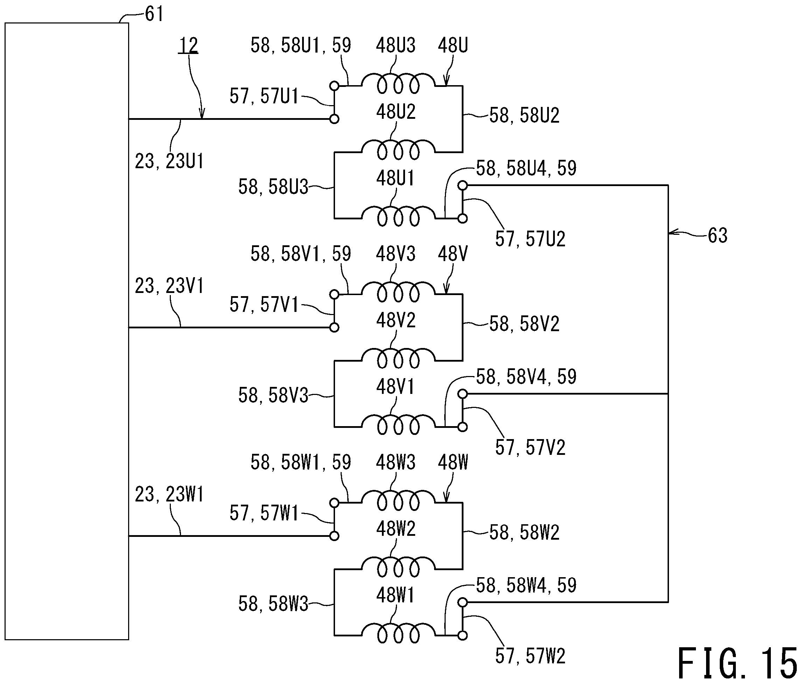

Fig. 15 is a connection wiring diagram of another case in which the motor according to the embodiment of the present invention is used as a star-connected motor.

As shown in Fig. 14 and Fig. 15, the windings 48U, 48V, 48W of the respective phases of the motor 12 according to the present embodiment may be connected in series. The windings 48U, 48V, 48W of the respective phases are connected in series by connecting the winding start end of the winding 48U, 48V, 48W of each phase to the corresponding first insulation-displacement connectors 57 and connecting the winding tail end of the winding 48U, 48V, 48W of each phase to the corresponding second insulation-displacement connectors 57.

As described above, each of the refrigeration cycle apparatus 1, the compressor 2, and the motor 12 according to the present embodiment includes two insulation-displacement connectors 57 for each phase. These insulation-displacement connectors 57 conductively connect N points of the windings 48 for each phase, and connect the windings 48 having N slots 49 (for example, three U-phase windings 48U1, 48U2, 48U3) in parallel for each phase. Additionally, each of the refrigeration cycle apparatus 1, the compressor 2, and the motor 12 includes: the first lead wires 23U1, 23V1, 23W1 connected to the respective first insulation-displacement connectors 57 of the three phases (i.e., connected to one of the two insulation-displacement connectors 57 of each phase); and either the second lead wires (23U2, 23V2, 23W2), which are connected for constituting open-end winding or the neutral conductor 63 constituting star connection connected to the respective second insulation-displacement connectors 57 of the three phases (i.e., connected to the other of the two insulation-displacement connectors 57 of each phase). In other words, when the motor 12 includes: the common first lead wires 23U1, 23V1, 23W1 connected to the first insulation-displacement connector 57 of each phase; and the second lead wires 23U2, 23V2, 23W2 connected to the second insulation-displacement connector 57 of each phase, the motor 12 is an open-end winding motor. Conversely, when the motor 12 includes: the common first lead wires 23U1, 23V1, 23W1; and the neutral conductor 63 connected to the second insulation-displacement connectors 57 of the respective phases, the motor 12 is a star-connected motor.

Consequently, regardless of whether the windings 48 of the respective phases are connected in parallel or in series, the windings 48 of the motor 12 can be readily wound because of its simple structure, which prevents quality deterioration caused by mistakes and variations in work accuracy in its manufacturing process to enhance manufacturability, and the motor 12 can be selectably configured as any one of an open-end winding induction motor and a star-connected motor.

Further, each of the refrigeration cycle apparatus 1, the compressor 2, and the motor 12 includes the neutral conductor 63 constituting the neutral point with two power lines 83 that are composed of: the first power line 81 connecting the second insulation-displacement connectors 57 of two of the three phases; and the second power line 82 connecting an intermedial portion of the first power line 81 to the second insulation-displacement connector 57 of the remaining one of the three phases. Consequently, the number of power lines 83 constituting the neutral point can be reduced, and thus, the manufacturing cost of the motor 12 can be reduced.

Moreover, each of the refrigeration cycle apparatus 1, the compressor 2, and the motor 12 may include the neutral conductor 63B constituting the neutral point with two power lines 83 that are composed of: the first power line 81 connecting the second insulation-displacement connectors 57 of one combination of two of the three phases; and the second power line 82 connecting the second insulation-displacement connectors 57 of another combination of two of the three phases. The neutral conductor 63B can connect the respective power lines 83 individually. Consequently, such a configuration of the motor 12 facilitates the wiring work of the power lines 83, and the manufacturing cost of the motor 12 can be reduced.

Furthermore, each of the refrigeration cycle apparatus 1, the compressor 2, and the motor 12 may include the neutral conductor 63A constituting the neutral point with three power lines 83 that are shorted at their respective one ends and are connected to the second insulation-displacement connectors 57 of the respective phases by their respective other ends. The neutral conductor 63A can be extremely readily manufactured, and the manufacturing cost of the motor 12 can be further reduced.

Therefore, the motor 12 of the above-described embodiments provides a simple structure in which the windings 48 can be readily wound to prevent quality deterioration caused by mistakes and variations in work accuracy, and can be selectably configured as any one of an open-end winding induction motor and a star-connected motor with high manufacturability. Each of the refrigeration cycle apparatus 1 and the compressor 2 of the respective embodiments includes the above-described motor 12, and thus, has the same effects as the motor 12.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### List of Reference Signs

- 1: refrigeration cycle apparatus
- 2: compressor
- 3: radiator
- 5: expander
- 6: heat absorber
- 7: accumulator
- 7a: suction pipe
- 8: refrigerant piping
- 8a: discharge pipe
- 11: airtight container
- 11a: body
- 11b: end plate
- 11c: end plate
- 12: motor
- 13: compression mechanism
- 15: crankshaft
- 15a: intermediate portion
- 15b: lower end portion
- 16: main bearing
- 17: sub bearing
- 18: sealed terminal
- 21: stator
- 22: rotor
- 23: lead wire
- 25: rotor core
- 26: crank-pin
- 31: cylinder chamber
- 32: cylinder
- 33: rolling piston
- 35: Vane
- 36, 38: fastener
- 37: discharge muffler
- 39: lubricating oil
- 41: yoke
- 41a: outer peripheral face
- 42: tooth
- 42a: tooth base
- 42b: tooth tip
- 42c: tooth tip face
- 43: stator core
- 43a: end face
- 43b: end face
- 43c: rotor accommodation space
- 45: insulator
- 45A: first insulator
- 45B: second insulator
- 48: winding
- 49: slot
- 51: outer wall
- 51a: outer peripheral face
- 52: inner wall
- 52a: inner peripheral face
- 53: bridging portion
- 55: segment
- 57: insulation-displacement connector
- 58: crossover
- 59: terminal line
- 61: first inverter circuit
- 62: second inverter circuit
- 63, 63A, 63B: neutral conductor
- 65: pressure-welding protrusion
- 66: slot
- 67: tab
- 68: connector holder
- 69: first connector holder
- 70: second connector holder
- 71: wire holding portion
- 72: insertion portion
- 73r, 73c, 731: groove
- 81: first power line
- 82: second power line
- 83: power line
- 85: terminal of the neutral conductor

## Claims

1. A motor comprising:
a cylindrical stator; and
a rotor disposed inside the stator,
wherein the stator comprises:
an iron core that includes a cylindrical yoke, and a plurality of teeth in number of multiples of three protruding inward of the yoke and arranged in a circumferential direction at intervals;
two insulators that are provided on both end faces in an axial direction of the iron core;
a plurality of windings, each of which is wound between the plurality of teeth and the two insulators;
a plurality of terminals provided in such a manner that two terminals are provided for each phase; and
a plurality of first lead wires connected to one of the two terminals for each phase,
wherein the plurality of teeth have a plurality of segments in each of which the adjacent three phases windings are arranged in a same order,
wherein the two terminals for each phase connect the plurality of windings wound around the corresponding teeth in parallel or in series, and
wherein the stator further comprises either a neutral conductor for constituting star connection that is connected to the other of the two terminals for each phase or a plurality of second lead wires for constituting open-end winding induction motor that are connected to the other of the two terminals for each phase.

2. The motor according to claim 1, wherein the neutral conductor includes two power lines composed of a first power line that connects the other of the two terminals of two phases selected from the three phases, and a second power line that connects an intermediate point of the first power line to the other of the two terminals of another phase.

3. The motor according to claim 1, wherein the neutral conductor includes two power lines composed of a first power line that connects the other of the two terminals of two phases selected from the three phases, and a second power line that connects the other of the two terminals of a combination of two phases different from the combination connected by the first power line.

4. The motor according to claim 1, wherein the neutral conductor comprises three power lines, each being shorted at one end and being connected to the other of the two terminals for each phase by the other end.

5. A compressor comprising:
an airtight container;
a compression mechanism that is housed in the airtight container and can compress a refrigerant to be introduced into the airtight container; and
the motor according to any one of claim 1 to claim 4, the motor being housed in the airtight container and being configured to drive the compression mechanism.

6. A refrigeration cycle apparatus comprising:
the compressor according to claim 5;
a radiator;
an expander;
a heat absorber; and
refrigerant pipe that connects the compressor, the radiator, the expander, and the heat absorber to circulate the refrigerant.
